# EUROPÄISCHE PATENTSCHRIFT

(11) **EP 3 272 557 B1**
(45) Veröffentlichungstag und Bekanntmachung des Hinweises auf die Patenterteilung: **27.01.2021**
(21) Anmeldenummer: 17172109.5
(22) Anmeldetag: 22.05.2017
(51) Int. Cl.: B60C 19/00, B29C 44/12, B60B 5/02, B60B 21/12

(54) **VERFAHREN ZUR HERSTELLUNG EINER WÄRMEISOLATIONSSCHICHT AUF EINER REIFENFELGE UND AUF DIESE WEISE ERHALTENE REIFENFELGE**
METHOD FOR PRODUCING A HEAT INSULATION LAYER ON A WHEEL RIM AND WHEEL RIM OBTAINED THEREBY
PROCÉDÉ DE FABRICATION D'UNE COUCHE D'ISOLATION THERMIQUE SUR UNE JANTE ET JANTE DE ROUE AINSI OBTENUE

(30) Priorität: 22.07.2016 DE 102016213466
(43) Veröffentlichungstag der Anmeldung: 24.01.2018
(73) Patentinhaber: Continental Reifen Deutschland GmbH, 30165 Hannover (DE)
(72) Erfinder: Kleffmann, Jens, 30453 Hannover (DE)
(74) Vertreter: Finger, Karsten

(56) Entgegenhaltungen:
- EP-A2- 0 217 711
- WO-A1-2011/086478
- DE-A1- 2 423 181
- DE-A1-102012 102 418
- DE-A1-102014 211 191
- US-A- 4 017 348
- US-A1- 2001 020 514
- US-A1- 2007 215 266
- US-A1- 2013 071 576

## Beschreibung

Die Erfindung betrifft ein Verfahren zur Herstellung zumindest einer aus Polyurethanschaum bestehenden Wärmeisolationsschicht auf einer Reifenfelge mit einem Felgenbett, Felgenschultern, Felgenhörnern und einer Radscheibe bzw. einem Radkranz.

Reifenfelgen für Fahrzeugluftreifen werden im Allgemeinen aus metallischen Werkstoffen gefertigt, die in Folge ihres Materials eine hohe Wärmeleitfähigkeit aufweisen. Auf Felgen montierte Fahrzeugluftreifen erwärmen sich im Betriebszustand auf Grund von Hystereseverlusten, sodass sich der mit komprimierter Luft gefüllte Raum zwischen der Felge und dem Reifeninneren und damit auch die Reifenfelge erwärmt. In Folge der hohen Wärmeleitfähigkeit des Felgenwerkstoffes kommt es über die Felgenoberflächen zu einem Wärmetransport aus dem Fahrzeugrad in die Umgebung.

Es ist bekannt, zur Verbesserung der Wärmeisolierung der Reifenfelge und damit zur Verbesserung bzw. Reduktion des Rollwiderstandes von Fahrzeugluftreifen auf den dem Reifeninnenraum zugewandten Bereich des Tiefbettes einer Reifenfelge eine Wärmeisolationsschicht in Form eines geschäumten und offenzelligen Materials mit Luftporen, beispielsweise aus Polyurethan, anzuordnen. Diese Maßnahme ist beispielsweise aus der DE 10 2012 102 418 A1 bekannt, wobei das geschäumte und offenzellige Material bei einem Reifeninnendruck von mindestens 6 bar im Wesentlichen formstabil sein soll, sodass die komprimierte Luft ungehindert in das offenzellige Material eindringen kann und dadurch die wärmeisolierenden Eigenschaften des offenzelligen Materials erhalten bleiben. Das geschäumte und offenzellige Material wird im Bereich des Tiefbettes der Reifenfelge angeklebt.

Die US 2001/020514 A1 befasst sich mit einem Verfahren zum dauerhaften Anordnen einer dekorativen Auflage an einer Radscheibe, wobei sich diese Auflage zur Radscheibe unter einem Abstand befindet. Durch die Auflage, die Radscheibe und "localized nests" werden Formkavitäten gebildet, in welche flüssiger Schaum eingefüllt wird, wobei kein Schaum austritt, wenn dieser nach dem Einfüllen expandiert. Dadurch vermeidet man auch ein Abschneiden von überschüssigem, ausgehärteten Schaum. Bei dem aus EP 0 217 711 A2 bekannten Verfahren wird eine dekorative Auflage auf der Außenseite der Felge unter Verwendung eines flüssigen Urethan-Reaktionsgemisches durch Einbringen desselben in einen Formenhohlraum hergestellt. Dazu wird ein spezielles, als "Polycast" bezeichnetes, in anderen Patenten des Anmelders enthaltenes Verfahren angewandt.

Der Erfindung liegt die Aufgabe zu Grunde, eine Wärmeisolationsschicht auf eine alternative und einfachere Weise an einer Reifenfelge anbringen zu können, um eine Reifenfelge zur Verfügung zu stellen, welche mit einer besonders gut haftenden Wärmeisolationsschicht versehen ist.

Gelöst wird die gestellte Aufgabe erfindungsgemäß dadurch, dass ein tixotrophes oder flüssiges, ein-oder zweikomponentiges Polyurethansystem unmittelbar auf die Innen- und/oder die Außenseite der Reifenfelge aufgebracht wird, unmittelbar beim Auftragen oder zeitverzögert ohne Auffüllen von Formkavitäten und daher frei aufschäumt, anschließend aushärtet und eine Wärmeisolationsschicht bildet.

Gemäß der Erfindung erfolgt daher keine Verklebung eines bereits hergestellten, aufgeschäumten und gehärteten Schaums auf der Felgenoberfläche. Das direkt auf die Reifenfelge aufgebrachte Polyurethansystem bildet durch Aufschäumen und Aushärtung unmittelbar auf der Reifenfelge eine weichelastische, wärmeisolierende Schaumschicht, die gut mit der Felge verbunden bzw. verklebt ist. Die Erfindung vereinfacht somit Herstellen einer an der Reifenfelge haftenden Wärmeisolierung.

Bei einer bevorzugten Ausführungsform der Erfindung wird das Polyurethansystem an der Außenseite der Reifenfelge, über den Bereich des Felgenbettes und/oder über zumindest eine Felgenschulter, unter Aussparung der Wulstsitzfläche, verlaufend, aufgebracht. Eine in diesen Bereichen gebildete Polyurethanschaumschicht kann besonders wirkungsvoll als Wärmeisolationsschicht dienen.

Bei einer weiteren bevorzugten Ausführungsvariante wird das Polyurethansystem an der Innenseite der Reifenfelge, über den Bereich des Felgenbettes und/oder zumindest einer Felgenschulter und/oder zumindest einem Felgenhorn verlaufend, aufgebracht. An der Innenseite der Reifenfelge steht t ein relativ großer Bereich zum Bilden einer Wärmeisolationsschicht zur Verfügung, sodass auch in diesem Bereich bzw. in diesen Bereichen eine besonders gut wirkende Wärmeisolationsschicht gebildet werden kann.

Zur weiteren Verbesserung der Wärmeisolierung kann gemäß der Erfindung das Polyurethansystem auch auf zumindest eine Seite der Radscheibe bzw. des Radkranzes, insbesondere in jenem Abschnitt der Radscheibe bzw. des Radkranzes, welcher unmittelbar an das Tiefbett der Felge anschließt, aufgebracht werden.

Besonders gut und in einheitlicher oder variierender Schichtdicke lässt sich das Polyurethansystem auf die betreffenden Teile der Felge mittels eines zum FIPFG (Formed-In-Place-Foam-Gasket) - Verfahrens analogen Verfahrens aufbringen.

Die gebildete Wärmeisolationsschicht kann offenzellig, gemischtzellig oder geschlossenzellig sein, sodass einerseits auf die Wärmeisolationseigenschaften und andererseits auch auf schallabsorbierende Eigenschaften Einfluss genommen werden kann.

Bei einer vorteilhaften Weiterbildung der Erfindung weist ferner die gebildete Wärmeisolationsschicht eine Shore A Härte von 0 Shore A bis 50 Shore A und eine Dichte von 0,01 g/cm³ bis 0,90 g/cm³ auf.

Die Dicke der gebildeten Wärmeisolationsschicht kann 1 mm bis 30 mm, insbesondere bis 20 mm, sein, wobei je nach der Position der Wärmeisolationsschicht auf der Felge dünnere oder dickere Schichtdicken gewählt werden können.

Die Erfindung betrifft ferner eine Reifenfelge für einen Fahrzeugluftreifen mit einem Felgenbett, Felgenschultern, Felgenhörnern und einer Radscheibe bzw. einem Radkranz, wobei die Reifenfelge auf ihrer Innen- und/oder ihrer Außenseite zumindest eine Wärmeisolationsschicht aus einem Polyurethanschaum aufweist, welche mittels des erfindungsgemäßen Verfahrens aufgebracht ist. Die Reifenfelge kann für einen Fahrzeugluftreifen für PKW, LKW oder Busse sein.

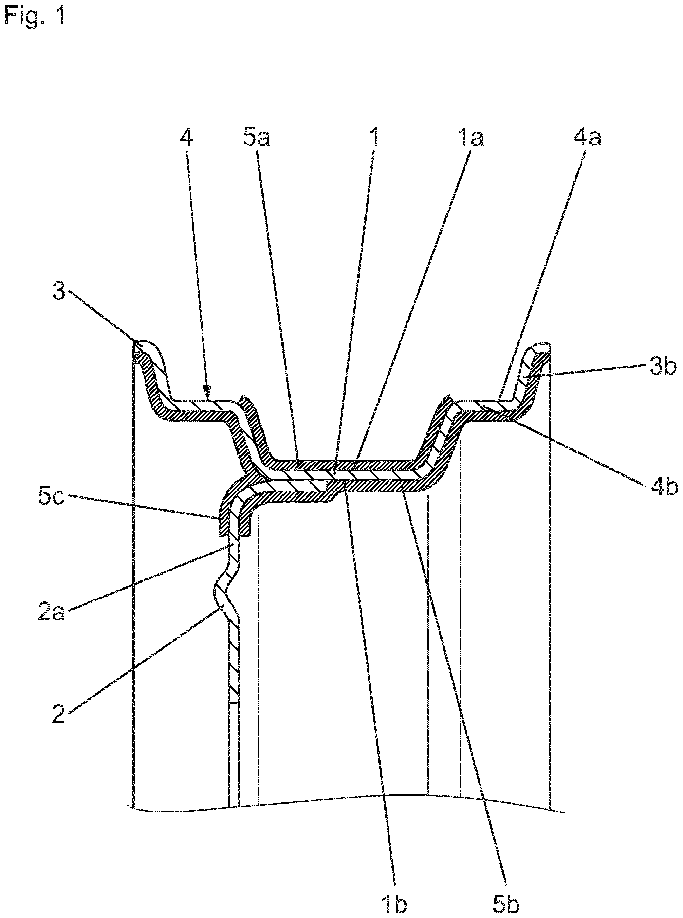

Weitere Merkmale, Vorteile und Einzelheiten der Erfindung werden nun anhand der Zeichnung, die ein Ausführungsbeispiel darstellt, näher beschrieben. Die einzige Figur, Fig. 1, zeigt eine Ausführungsvariante einer Tiefbettfelge für einen Fahrzeugluftreifen eines Kraftfahrzeuges im Querschnitt.

Fig. 1 zeigt eine Tiefbettfelge herkömmlicher Ausgestaltung, beispielhaft für einen PKW-Fahrzeugluftreifen, mit einem Felgenbett 1, zu beiden Seiten an dieses anschließende Felgenschultern 4 mit Wulstsitzflächen 4a und mit Felgenhörnern 3. Die Felge weist ferner eine Radscheibe bzw. einen Radkranz 2 auf, welche bzw. welcher in an sich bekannter Weise einen Radnabenbereich zur Anordnung der Felge an einem Aufnahmeflansch einer Radlagerung eines Kraftfahrzeuges aufweist. Ein nicht dargestellter, auf der Felge montierter Fahrzeugluftreifen befindet sich mit seinen Wulstbereichen in Kontakt mit den Wulstsitzflächen 4a und den Felgenhörnern 3.

An der Außenseite und/oder der Innenseite von Felgenbestandteilen ist zumindest eine Wärmeisolationsschicht 5a, 5b aufgebracht, wobei als Außenseite die einem auf der Felge montierten Reifen zugewandte Seite bezeichnet ist. Bei der in Fig. 1 gezeigten Ausführungsform erstreckt sich die Wärmeisolationsschicht 5a über die Außenseite 1a des Felgenbettes 1 und bis zu den beiden Wulstsitzflächen 4a, jedoch nicht über die Wulstsitzflächen 4a. Die Wärmeisolationsschicht 5b befindet sich an der Innenseite 1b des Felgenbettes 1, ferner an den Innenseiten 4b der Felgenschultern 4 und den Innenseiten 3b der Felgenhörner 3. Darüber hinaus sind weitere Wärmeisolationsschichten 5c an beiden Seiten des von der Innenseite 1b des Felgenbettes 1 ausgehenden ersten Abschnittes 2a der Radscheibe bzw. des Radkranzes 2 aufgebracht.

Die Wärmeisolationsschichten 5a, 5b, 5c sind in situ hergestellt, also durch ein unmittelbares Aufbringen eines tixotrophen oder flüssigen, einkomponentigen oder zweikomponentigen Polyurethansystems auf die betreffenden Teile der Felge, insbesondere mittels eines zum bekannten FIPFG (Formed-In-Place-Foam-Gasket) analogen Verfahrens. Das aufgebrachte Polyurethansystem schäumt zur Schaumschicht auf, wobei das Aufschäumen unmittelbar beim Auftragen auf die Felgenoberfläche oder auch zeitverzögert erfolgen kann. Der aufgebrachte Schaum härtet mit oder ohne chemische Reaktion, je nach dem verwendeten Polyurethansystem, aus. Das eingesetzte Polyurethansystem kann auf Polyetherbasis oder Polyesterbasis sein. Die gebildete Schaumschicht kann offenzellig, gemischtzellig oder geschlossenzellig sein und wird mit einer Dicke von 1 mm bis zu 30 mm, insbesondere bis zu 20 mm, hergestellt. Die Shore A Härte des Schaumes nach DIN ISO 7619-1 kann zwischen 0 und 50 Shore A betragen, seine Dichte beträgt zwischen 0,01 g/cm³ und 0,90 g/cm³.

Bei einem zweikomponentigen Polyurethansystem werden das Harz und der Härter entsprechend eines vorgegebenen Mischungsverhältnisses in einer Dosieranlage gemischt und umgehend auf die betreffenden Bereiche der Felge aufgetragen. Mit dem Verfahren gemäß der Erfindung lassen sich Wärmeisolationsschichten herstellen, die entweder eine zumindest weitgehend konstante Dicke oder einen ab- bzw. zunehmenden Dickenverlauf aufweisen.

### Bezugsziffernliste

- 1 ......................: Felgenbett
- 1a ....................: Außenseite
- 1b ....................: Innenseite
- 2 ......................: Radkranz
- 2a ....................: Abschnitt
- 3 ......................: Felgenhorn
- 3b ....................: Innenseite
- 4 ......................: Felgenschulter
- 4a ....................: Wulstsitzfläche
- 4b ....................: Innenseite
- 5a, 5b, 5c .........: Wärmeisolationsschicht

## Patentansprüche

1. Verfahren zur Herstellung zumindest einer aus Polyurethanschaum bestehenden Wärmeisolationsschicht (5a, 5b, 5c) auf einer Reifenfelge mit einem Felgenbett (1), Felgenschultern (4) mit Wulstsitzflächen (4a), Felgenhörnern (3) und einer Radscheibe bzw. einem Radkranz (2),
**dadurch gekennzeichnet,**
**dass** ein tixotrophes oder flüssiges, ein-oder zweikomponentiges Polyurethansystem unmittelbar auf die Innen- und/oder die Außenseite der Reifenfelge aufgebracht wird, unmittelbar beim Auftragen oder zeitverzögert, ohne Auffüllen von Formkavitäten und daher frei aufschäumt, anschließend aushärtet und eine Wärmeisolationsschicht (5a, 5b, 5c) bildet.

2. Verfahren nach Anspruch 1, **dadurch gekennzeichnet, dass** das Polyurethansystem an der Außenseite der Reifenfelge, über den Bereich des Felgenbettes (1) und/oder über zumindest eine Felgenschulter (4), unter Aussparung der Wulstsitzfläche (4a), verlaufend, aufgebracht wird.

3. Verfahren nach Anspruch 1 oder 2, **dadurch gekennzeichnet, dass** das Polyurethansystem an der Innenseite der Reifenfelge, über den Bereich des Felgenbettes (1) und/oder zumindest einer Felgenschulter (4) und/oder zumindest einem Felgenhorn (3) verlaufend, aufgebracht wird.

4. Verfahren nach einem der Ansprüche 1 bis 3, **dadurch gekennzeichnet, dass** das Polyurethansystem auf zumindest eine Seite der Radscheibe bzw. des Radkranzes aufgebracht wird.

5. Verfahren nach einem der Ansprüche 1 bis 4, **dadurch gekennzeichnet, dass** das Polyurethansystems auf die betreffenden Teile der Felge mittels eines zum FIPFG (Formed-In-Place-Foam-Gasket) - Verfahrens analogen Verfahrens aufgebracht wird.

6. Verfahren nach einem der Ansprüche 1 bis 5, **dadurch gekennzeichnet, dass** die gebildete Wärmeisolationsschicht (5a, 5b, 5c) offenzellig, gemischtzellig oder geschlossenzellig ist.

7. Verfahren nach einem der Ansprüche 1 bis 6, **dadurch gekennzeichnet, dass** die gebildete Wärmeisolationsschicht (5a, 5b, 5c) eine Shore A Härte von 0 bis 50 Shore A aufweist.

8. Verfahren nach einem der Ansprüche 1 bis 7, **dadurch gekennzeichnet, dass** die gebildete Wärmeisolationsschicht (5a, 5b, 5c) eine Dichte von 0,01 g/cm³ bis 0,90 g/cm³ aufweist.

9. Verfahren nach einem der Ansprüche 1 bis 8, **dadurch gekennzeichnet, dass** die gebildete Wärmeisolationsschicht (5a, 5b, 5c) eine Dicke von 1 mm bis 30 mm, insbesondere bis 20 mm, aufweist.

10. Verfahren nach einem der Ansprüche 1 bis 9, **dadurch gekennzeichnet, dass** das aufgebrachte Polyurethansystem auf Polyether oder Polyester basiert.

11. Reifenfelge für einen Fahrzeugluftreifen mit einem Felgenbett (1), Felgenschultern (4), Felgenhörnern (3) und einer Radscheibe bzw. einem Radkranz (2), welche Reifenfelge auf ihrer Innen- und/oder ihrer Außenseite zumindest eine Wärmeisolationsschicht (5a, 5b, 5c) aus einem Polyurethanschaum aufweist, welche gemäß einem oder mehreren der Ansprüche 1 bis 10 aufgebracht ist.

12. Reifenfelge nach Anspruch 11 für einen Fahrzeugluftreifen für PKW, LKW oder Busse.

## Claims

1. Method for producing at least one heat insulation layer (5a, 5b, 5c), consisting of polyurethane foam, on a tyre rim with a rim base (1), rim shoulders (4) with bead seats (4a), rim flanges (3) and a wheel disc or a wheel rim (2),
**characterized**
**in that** a thixotropic or liquid, one- or two-component polyurethane system is applied directly to the inner side and/or the outer side of the tyre rim, foams directly during the application or with a time delay, without filling mould cavities and therefore freely, subsequently cures and forms a heat insulation layer (5a, 5b, 5c).

2. Method according to Claim 1, **characterized in that** the polyurethane system is applied on the outer side of the tyre rim, running over the region of the rim base (1) and/or over at least one rim shoulder (4), while omitting the bead seat (4a).

3. Method according to Claim 1 or 2, **characterized in that** the polyurethane system is applied on the inner side of the tyre rim, running over the region of the rim base (1) and/or at least one rim shoulder (4) and/or at least one rim flange (3).

4. Method according to one of Claims 1 to 3, **characterized in that** the polyurethane system is applied to at least one side of the wheel disc or the wheel rim.

5. Method according to one of Claims 1 to 4, **characterized in that** the polyurethane system is applied to the relevant parts of the rim by means of a process analogous to the FIPFG (Formed-in-Place-Foam-Gasket) process.

6. Method according to one of Claims 1 to 5, **characterized in that** the heat insulation layer (5a, 5b, 5c) formed is of an open-cell, mixed-cell or closed-cell form.

7. Method according to one of Claims 1 to 6, **characterized in that** the heat insulation layer (5a, 5b, 5c) formed has a Shore A hardness of 0 to 50 Shore A.

8. Method according to one of Claims 1 to 7, **characterized in that** the heat insulation layer (5a, 5b, 5c) formed has a density of 0.01 g/cm³ to 0.90 g/cm³.

9. Method according to one of Claims 1 to 8, **characterized in that** the heat insulation layer (5a, 5b, 5c) formed has a thickness of 1 mm to 30 mm, in particular up to 20 mm.

10. Method according to one of Claims 1 to 9, **characterized in that** the applied polyurethane system is based on polyether or polyester.

11. Tyre rim for a pneumatic vehicle tyre with a rim base (1), rim shoulders (4), rim flanges (3) and a wheel disc or a wheel rim (2), which tyre rim has on its inner side and/or its outer side at least one heat insulation layer (5a, 5b, 5c) of a polyurethane foam applied in a way according to one or more of Claims 1 to 10.

12. Tyre rim according to Claim 11 for a pneumatic vehicle tyre for passenger cars, trucks or buses.

## Revendications

1. Procédé de production d'au moins une couche d'isolation thermique (5a, 5b, 5c), en mousse de polyuréthane, sur une jante de pneumatique comprenant une embase de jante (1), des épaulements de jante (4) pourvus de surfaces de siège de talon (4a), des rebords de jante (3) et un disque de roue ou une couronne de roue (2),
**caractérisé en ce que**
un système polyuréthane thixotrope ou liquide, à un ou deux composants est appliqué directement sur un côté intérieur et/ou à l'extérieur de la jante de pneumatique, immédiatement lors de l'application ou de manière différée, est laissé à mousser sans remplir les cavités du moule et donc librement, puis est durci et forme une couche d'isolation thermique (5a, 5b, 5c).

2. Procédé selon la revendication 1, **caractérisé en ce que** le système polyuréthane est appliqué sur le côté extérieur de la jante de pneumatique, de façon à s'étendre sur la zone de l'embase de jante (1) et/ou sur au moins un épaulement de jante (4), en évitant la surface de siège de talon (4a).

3. Procédé selon la revendication 1 ou 2, **caractérisé en ce que** le système polyuréthane est appliqué du côté intérieur de la jante de pneumatique, en s'étendant sur la zone de l'embase de jante (1) et/ou au moins un épaulement de jante (4) et/ou au moins un rebord de jante (3).

4. Procédé selon l'une des revendications 1 à 3, **caractérisé en ce que** le système polyuréthane est appliqué sur au moins un côté du disque de roue ou de la couronne de roue.

5. Procédé selon l'une des revendications 1 à 4, **caractérisé en ce que** le système polyuréthane est appliqué sur les parties concernées de la jante au moyen d'un procédé analogue au procédé FIPFG (Formed-In-Place-Foam-Gasket) .

6. Procédé selon l'une des revendications 1 à 5, **caractérisé en ce que** la couche d'isolation thermique (5a, 5b, 5c) formée est à cellules ouvertes, mixtes ou fermées.

7. Procédé selon l'une des revendications 1 à 6, **caractérisé en ce que** la couche d'isolation thermique (5a, 5b, 5c) formée a une dureté Shore A de 0 à 50 Shore A.

8. Procédé selon l'une des revendications 1 à 7, **caractérisé en ce que** la couche d'isolation thermique (5a, 5b, 5c) formée a une densité de 0,01 g/cm³ à 0,90 g/cm³.

9. Procédé selon l'une des revendications 1 à 8, **caractérisé en ce que** la couche d'isolation thermique (5a, 5b, 5c) formée a une épaisseur de 1 mm à 30 mm, notamment à 20 mm.

10. Procédé selon l'une des revendications 1 à 9, **caractérisé en ce que** le système polyuréthane appliqué est à base de polyéther ou de polyester.

11. Jante de pneumatique destinée à un pneumatique de véhicule et comprenant une embase de jante (1), des épaulements de jante (4), des rebords de jante (3) et un disque de roue ou une couronne de roue (2), laquelle jante de pneumatique comporte sur son côté intérieur et/ou son côté extérieur au moins une couche d'isolation thermique (5a, 5b, 5c) en mousse de polyuréthane qui est appliquée selon une ou plusieurs des revendications 1 à 10.

12. Jante de pneumatique selon la revendication 11 destinée à un pneumatique de véhicule pour voitures, camions ou bus.
